# EUROPEAN PATENT SPECIFICATION

(11) **EP 4 003 920 B1**
(45) Date of publication and mention of the grant of the patent: **19.11.2025**
(21) Application number: 20846618.5
(22) Date of filing: 31.07.2020
(51) Int. Cl.: B01D 29/11, B01D 35/05, C02F 1/00, E04H 4/12, C02F 103/42

(54) **BUOYANT CLEANING DEVICE FOR AN ABOVE-GROUND POOL**
SCHWIMMFÄHIGE REINIGUNGSVORRICHTUNG FÜR EIN OBERIRDISCHES SCHWIMMBECKEN
DISPOSITIF DE NETTOYAGE FLOTTANT POUR PISCINE HORS SOL

(30) Priority: 31.07.2019 CN 201921220239 U
(43) Date of publication of application: 01.06.2022
(73) Proprietor: Belgravia Wood Limited, Tortola, VG110 (VG)
(72) Inventor: LEUNG, Chi Yin Alan, Hong Kong (CN)
(74) Representative: Finnegan Europe LLP
(86) International application number: PCT/US2020/044491
(87) International publication number: WO 2021/022154

(56) References cited:
- EP-A1- 3 382 126
- CN-C- 100 444 923
- US-A- 3 074 349
- US-A- 5 133 854
- US-A1- 2008 217 229
- US-A1- 2011 247 970
- US-A1- 2012 248 045
- US-A1- 2018 111 843
- US-B2- 7 022 223
- PONDGURU: "OASE SWIMSKIM 25", YOUTUBE, 3 August 2009 (2009-08-03), XP054981630, Retrieved from the Internet <URL:https://www.youtube.com/watch?v=oYvAbnTSJ9o>

## Description

### FIELD OF THE INVENTION

The present invention relates to a buoyant cleaning device for an above-ground pool.

### BACKGROUND

A variety of above-ground swimming pools are known. Some are inflatable and have hollow inflatable side walls capable of containing water, whereas others are known as frame pools. A common type of frame pool is formed from molded plastic and can permanently take on the shape of a small, portable swimming pool. Such pools can be manufactured in a variety of shapes and sizes, thereby allowing a consumer to choose a pool that suits their particular needs.

One problem with conventional above-ground pools, however, is that the pools are difficult to keep clean. In contrast, most in-ground pools use elaborate water circulation and treatment systems with a variety of pumps, and pool skimmers with filters built into the walls. No such luxury exists when using above-ground pools. Since above-ground pools are temporary and must have be able to be assembled and disassembled with ease, traditional ground-standing pumps and hoses can become cumbersome for a user of the pool. Additionally, with no skimmer function, the pool can fill with dirt, leaves, bugs, and other undesired debris that may only be removed from the pool after draining. If skimming is desired, a separate skimmer must be mounted on a wall of the pool, requiring more hoses to route excess water from the skimmer to a pumping system. With an increase in number and length of hoses, the more head loss a pump must overcome, drawing more power and further driving up costs. Further, a wall-mounted skimmer for an above-ground pool requires an aperture in the pool wall for installation, which reduces the strength of the pool and is user-unfriendly, and, in the case of an inflatable pool, infeasible. CN 100 444 923 C relates to a pool water circulation-filtering device, and US 2008/217229 A1 relates to a vacuum skimmer for ponds, swimming pools or similar bodies of water or water containers.

What is needed, therefore, is an improved skimmer and/or pump system for an above-ground pool that removes the necessity for cumbersome hoses, maintains the modularity and temporary nature of the pool, and does not require installation on a side wall or any other face of the pool. Embodiments of the present invention address this need as well as other needs that will become apparent upon reading the description below in conjunction with the drawings. EP3382126A1 and US 2008/217229A1 describe buoyant cleaning devices for pools of the prior art.

### BRIEF SUMMARY OF THE INVENTION

The invention relates to a buoyant cleaning device for an above-ground pool, comprising: a housing including an upper housing and a lower housing; a strainer contained in the upper housing; a pump contained in the lower housing, the pump comprising a pump inlet and a pump outlet; and one or more flotation devices detachably attached to the housing; wherein the strainer is concave inwards and provides surface rifling in a spiral fashion to induce laminar flow of fluid through the strainer.

The invention is defined by the claims.

### BRIEF DESCRIPTION OF THE DRAWINGS

The accompanying drawings, which are incorporated in and constitute a part of this specification, illustrate multiple embodiments of the present invention and serve to explain the principles of the present invention. The drawings are not intended to limit the scope of invention in any manner.
FIG. 1 illustrates a cross-sectional isometric view of a pool cleaning device according to some embodiments of the present invention;
FIG. 2 illustrates a cross-sectional view of a pool cleaning device according to some embodiments of the present invention;
FIG. 3 illustrates an isometric top view of a pool cleaning device according to some embodiments of the present invention;
FIG. 4 illustrates an isometric view of a pump for a pool cleaning device according to some embodiments of the present invention;
FIG. 5 illustrates an exploded isometric view of a pump for a pool cleaning device according to some embodiments of the present invention;
FIG. 6 illustrates an isometric view of a stator to power a pump for a pool cleaning device according to some embodiments of the present invention;
FIG. 7a illustrates a top view of a power source and stator for a pump for a pool cleaning device according to some embodiments of the present invention;
FIG. 7b illustrates a top view of a power source and stator for a pump in a potted configuration for a pool cleaning device according to some embodiments of the present invention;
FIG. 8 illustrates an isometric bottom view of a pool cleaning device according to some embodiments of the present invention;
FIG. 9 illustrates an isometric view of a charging dock for a pool cleaning device according to some embodiments of the present invention;
FIG. 10a illustrates a top-down view of a strainer for a pool cleaning device according to some embodiments of the present invention;
FIG. 10b illustrates an isometric view of a pool cleaning device according to some embodiments of the present invention;
FIG. 11a illustrates a side view of a housing for a pool cleaning device according to some embodiments of the present invention;
FIG. 11b illustrates a side view of a housing for a pool cleaning device according to some embodiments of the present invention;
FIG. 12 illustrates an isometric bottom view of a floatation device for a pool cleaning device according to some embodiments of the present invention;
FIG. 13a illustrates an exploded isometric view of a pool cleaning device comprising a prefilter and according to some embodiments of the present invention;
FIG. 13b illustrates an isometric view of a pool cleaning device according to some embodiments of the present invention;
FIG. 14 illustrates a pool and pump system; and
FIG. 15 illustrates a pool for use with a pool cleaning device according to some embodiments of the present invention.

### DETAILED DESCRIPTION

Although certain embodiments of the invention are explained in detail, it is to be understood that other embodiments are contemplated. Accordingly, it is not intended that the invention is limited in its scope to the details of construction and arrangement of components set forth in the following description or illustrated in the drawings. Other embodiments of the invention are capable of being practiced or carried out in various ways. Also, in describing the embodiments, specific terminology will be resorted to for the sake of clarity. It is intended that each term contemplates its broadest meaning as understood by those skilled in the art and includes all technical equivalents which operate in a similar manner to accomplish a similar purpose. The scope of the invention is defined by the claims.

Herein, the use of terms such as "having," "has," "including," or "includes" are open-ended and are intended to have the same meaning as terms such as "comprising" or "comprises" and not preclude the presence of other structure, material, or acts. Similarly, though the use of terms such as "can" or "may" are intended to be open-ended and to reflect that structure, material, or acts are not necessary, the failure to use such terms is not intended to reflect that structure, material, or acts are essential. To the extent that structure, material, or acts are presently considered to be essential, they are identified as such.

By "comprising" or "containing" or "including" is meant that at least the named compound, element, particle, or method step is present in the composition or article or method, but does not exclude the presence of other compounds, materials, particles, method steps, even if the other such compounds, material, particles, method steps have the same function as what is named.

It is also to be understood that the mention of one or more method steps does not preclude the presence of additional method steps or intervening method steps between those steps expressly identified.

As described above, a problem with existing above-ground pools is that the pools are difficult to keep clean. Since above-ground pools are temporary and must have the ability to assemble and disassemble with ease, traditional ground-standing pumps and hoses can become cumbersome for a user of the pool. Additionally, with no skimmer function, the pool can fill with dirt, leaves, bugs, and other undesired debris that may only be removed from the pool after draining. If skimming is desired, a separate skimmer must be mounted on a wall of the pool, requiring more hoses to route excess water from the skimmer to a pumping system and additional holes to be cut into the sides of the pool. Improved devices for cleaning an above-ground pool are desirable.

A pool cleaning device of the present invention is a buoyant cleaning device for an above-ground pool, comprising: a housing including an upper housing and a lower housing; a strainer contained in the upper housing; a pump contained in the lower housing, the pump comprising a pump inlet and a pump outlet; and one or more flotation devices detachably attached to the housing; wherein the strainer is concave inwards and provides surface rifling in a spiral fashion to induce laminar flow of fluid through the strainer. The upper housing can contain the strainer in an inlet aperture and be configured to receive the one or more floatation devices. In such an embodiment, the strainer can be disposed within the inlet aperture such that water can flow over the lip and down into the inlet aperture through the strainer. In order to properly skim the pool, the upper housing and one or more floatation devices can be configured such that the upper housing floats at or just below the water line. Water with debris can then flow into the upper housing and through the strainer due to gravity, where large debris will be captured by the strainer. Additionally, pressure gradient caused by the pump can facilitate the flow of water into the upper housing. In some embodiments, the strainer can be removable such that a user of the device can remove the strainer to clean the debris and increase the lifetime of the device. Further, in some embodiments, the device can comprise a filter. The filter can be housed in the upper housing. For example, the filter can be positioned in the upper housing below the strainer to catch smaller particulates not captured by the strainer. Once water flows past the strainer and potentially the filter, the water can pass through a strainer outlet aperture and leave the upper housing.

In some embodiments, the lower housing can have an outlet aperture and can house the pump. The lower housing can additionally be configured to detachably attach to the upper housing, such that the pump inlet is in communication with the strainer outlet aperture. Additionally, the pump can be positioned such that the pump outlet is in communication with the outlet aperture. In such an embodiment, the pump in the lower housing can provide a sufficient pressure gradient to draw the water from the upper housing through the filter and circulate the water out to the pool through the outlet aperture. In exemplary embodiments of the present invention, the pump can be any pump known to the skilled artisan, such as a centrifugal pump.

The present invention provides a pool cleaning device comprising a housing and one or more floatation devices. The devices of the present invention can be used for cleaning pools, but it is understood that the device can be alternatively used for other cleaning purposes, such as reservoirs, tanks, ponds, and the like. Embodiments of the present invention can provide a device with no extra lines or hoses such that the device is free-floating in the pool. Such an embodiment would remove the need for wall-mounted cleaning devices or cumbersome hose attachments.

The device can be configured to float using the one or more floatation devices in any number of configurations. For example, the cleaning device can be buoyantly configured to float at the surface of the pool. Alternatively, the cleaning device can be buoyantly configured to float just below the surface of the water or can be neutrally buoyant to maintain any desired level in the pool. The floatation devices of the buoyant cleaning device of the present invention are configured to detachably attach from the housing. In order to be detachably attached from the housing, the one or more floatation devices can comprise a receiving void configured to receive a means of attachment from the housing. The receiving void can additionally be large enough to enable a user of the device to manually detach or attach the floatation device. The receiving void can be separate from the interior of the floatation device such that buoyancy is not compromised by the receiving void.

The one or more floatation devices can be customized by a user of the pool cleaning device. For example, if a user of the device wishes to skim the surface of a pool, the user can detachably attach many floatation devices from the one or more floatation devices to configure the device to float at the surface of the water. Alternatively, if a user of the device wishes to pump the pool water to provide circulation in the pool, the user can detach floatation devices from the housing to configure the device to be neutrally buoyant below the surface of the water. The floatation devices can be provided with the device in any amount to confer a desirable configuration or buoyancy (e.g., one or more, two or more, three or more, four or more, etc.). In some embodiments, the floatation devices can be provided in the form of one continuous flotation device.

The floatation devices can be made from any material with properties able to retain shape and keep fluid out of the device. In some embodiments, the floatation devices can be made from a hard or soft plastic material. Suitable examples of a hard or soft plastic material can include, but are not limited to, polyethylene (PE), polypropylene (PP), polyethylene terephthalate (PET), polystyrene, polystyrene butadiene, polybutylene succinate (PBS), polyester, polycarbonate, polyvinyl chloride (PVC), polymethyl methacrylate, acrylonitrile butadiene styrene, chlorinated polyvinyl chloride, nylon, polylactic acid, polytetrafluoroethylene, or a combination thereof. The floatation devices can be filled with air, or any material having a lower density with water such that the floatation devices provide an upwards buoyant force when in water. For example, the floatation devices can be filled with air, or with a mixture of polystyrene and air.

The floatation devices can be provided in a number of shapes and sizes configured to maintain the buoyancy of the device. The floatation devices can be configured in such shapes as spherical, rectangular, pyramidal, tetrahedron, polyhedron, elliptical, oblong, and the like. Additionally, the floatation devices can be formed in shapes to fit the theme of the pool. For example, in a nautically themed pool, the floatation devices can take the shape of fish, shells, crabs, starfish, boats, waves, and the like. For the sake of safety, if any floatation device comprises a shape with sharp edges or corners, the sharp edges or corners can be rounded such that there is no risk of injury to a user of the pool. Additionally, the removal of sharp edges or corners would ensure that there is no risk of puncturing or cutting the pool itself.

In some embodiments, the floatation devices can comprise a plurality of floatation support members. The floatation support members can radially dispose the floatation devices on and outwards from the housing. The floatation support members can be any length desired to suspend the floatation devices away from the housing while maintaining an upward buoyant force on the cleaning device without failing. For example, spherical floatation devices can further comprise rods or poles to detachably attach to the housing. While any length of support member can be used, it is understood that shorter support members are beneficial due to at least the ability to maintain an upward buoyant force on the device without failing. A longer support member may create a lever with the device and the floatation device, increasing the stress on the support member. Additionally, shorter support members may reduce the amount of the pool taken up by the cleaning device to improve the user experience. In some embodiments, one floatation support member can be used to radially dispose the floatation devices around the housing, however, more can be used (e.g., one or more, two or more, three or more, four or more, five or more, six or more, etc.). In some embodiments, for example, five floatation devices can be radially disposed with five support members extending from the housing in a generally star-shaped configuration. By way of another example, three floatation devices can be radially disposed from the housing with three support members in a generally triangular configuration. It is understood that the number of floatation devices may not necessarily equal the number of support members, as multiple floatation devices may be supported by a single support member.

The pool cleaning device of the present invention comprises a housing. The housing is be attached to a number of floatation devices and configured to float in a number of ways as mentioned above. The housing comprises a detachable attachment means for detachably attaching the one or more floatation devices. For instance, the housing can comprise an upper lip with one or more spring-loaded latches. A user of the device could detachably attach one or more floatation devices to some or all of the spring-loaded latches as desired. The one or more spring-loaded latches can comprise a latching member configured to pop out into a floatation device when the floatation device is aligned with the spring-loaded latch. The spring-loaded latches can further comprise a spring configured to spring the latching member into place, or any other device operable to fasten the floatation device to the housing. It is understood that other means of detachable attachment are considered, such as interference fit, friction fit, screw threaded, and the like. In some embodiments, when appropriate, certain other elements may be used to fasten the floatation devices to the housing, such as gaskets.

In some embodiments, the spring-loaded latch can be a flexible latch, configured to flex from a first (i.e., neutral) position to a second inward position to clear the floatation device and then return to the neutral position where each is held in place. In such an embodiment, the aforementioned receiving void of the floatation device can receive said flexible latch. The receiving void can further comprise a fastening notch configured to depress the flexible latch during attachment and secure the latch in the neutral position to hold the latch in place. Additionally, the receiving void and the fastening notch can operate in the same manner if the means of attachment is a spring-loaded latch rather than a flexible latch, as a spring-loaded latch would also have a first neutral position and a depressed, or second, inward position.

To detach the one or more floatation devices, a user of the cleaning device can utilize the receiving void to depress the flexible latch or other such device to clear the fastening notch of the floatation device. Once cleared, the latch can return to the neutral position and the floatation device can freely slide up the latch and upper lip. Such an embodiment can also be used when the one or more floatation devices is attached using a spring-loaded latch.

In some embodiments, the housing can comprise a hard or soft plastic material as with the floatation devices above. Other materials may be used so long as said materials are able to be submerged in water and substantially retain a structure. The housing can come in a variety of shapes, such as having a footprint that is substantially a circle, square, rectangle, rectangle with rounded corners, triangle, triangle with rounded corners, oval, ellipse, and the like. Additionally, the housing can comprise a combination of shapes such that the housing may be substantially one shape different from the footprint. For example, the housing can have a substantially circular footprint but can be rectangular in shape for the majority of the housing. In some embodiments, the housing can be formed in shapes to fit the theme of the pool. For example, in a nautically themed pool, the housing can take the shape of fish, shells, crabs, starfish, boats, waves, a lighthouse, and the like. For the sake of safety, if the housing comprises a shape with sharp edges or corners, the sharp edges or corners can be rounded such that there is no risk of injury to a user of the pool. Additionally, the removal of sharp edges or corners would ensure that there is no risk of puncturing or cutting the pool itself.

The housing can further be coated with any number of components as desired by the manufacturer or the user. For example, the housing can be coated with an anti-corrosion agent, water-resistant layer, or a sealant. Alternatively, the housing can be coated with paint, glow-in-the dark paint, or other coatings to provide an exterior design or a desired visual effect for the device. The exterior of the housing can further comprise ornamental alterations, such as engravings, or other such designs such as notches or raised portions to provide an aesthetically pleasing appearance.

In some embodiments, the housing can comprise an inlet aperture and an outlet aperture. The inlet aperture and outlet aperture can be disposed on the exterior of the housing and configured to provide fluid flow through the housing. For example, the inlet aperture can be disposed on the top surface of the housing and provide fluid flow to the outlet aperture disposed on a side of the housing. Alternatively, both the inlet and outlet can be on different sides of the housing, or any surface of the housing such that fluid can flow through the housing. In some embodiments, the top surface of the housing can be hollow such that the entire top of the housing is an inlet aperture. In other words, the upper lip of the housing can substantially surround an opening in the housing, the opening configured to be the inlet aperture.

The housing comprises multiple sections. The housing comprises an upper housing and a lower housing. Alternatively, the housing can comprise more than two sections, such as three, four, five, or more. The multiple sections can be configured to detachably attach from one another. The present invention provides a housing comprising an upper housing and a lower housing. The upper housing can be configured to detachably attach to the lower housing. The attachment can be provided in a number of ways, such as rotatable screw threading, interference fit, friction fit, gaskets, and the like. Additionally, the upper and lower housings can comprise apertures such that the upper and lower housings are in fluid communication with each other. In other words, when the upper and lower housings are attached, fluid can flow freely between the upper and lower housings. For example, water can flow through an inlet aperture on the top surface of the upper housing, through the upper housing and into the lower housing, and then out an outlet aperture on a side surface of the lower housing. In this manner, any number of housing sections can be detachably attached to one another to create a chain of free fluid movement throughout the housing as a whole. It is understood that the sections of the housing, as well as any of the components disclosed hereafter, may be conjoined through means known to one of ordinary skill in the art, including but not limited to, screws and threading, nails, nuts, bolts, washers, adhesives, interference or friction fit, and the like.

According to the invention, the aforementioned floatation devices are configured to detachably attach to the upper housing. Such an embodiment would provide buoyancy to the upper housing and, provided they are connected, the lower housing and any subsequent housings attached thereto. Alternatively, the one or more floatation devices can be detachably attached to other housing sections, depending on the desired use. For example, the floatation devices can be attached to a middle housing section if the device is desired to be neutrally buoyant.

The present invention provides a pool cleaning device comprising an upper housing. As mentioned above, in some embodiments, the upper housing can comprise a hollow top surface as an inlet aperture and an outlet aperture disposed on another exterior surface. Additionally, the upper housing can be attached to one or more floatation devices. The upper housing of the invention houses a strainer. The strainer can comprise opening sizes configured to allow the easy passage of fluid through the strainer while entrapping large debris, such as bugs and leaves. According to the invention, the strainer is concave inwards and provide surface rifling in a spiral fashion, such that the flow of water into the device is laminar (i.e., smooth).

The strainer can be housed in the upper housing across the span of the inlet aperture. In other words, the hollow top surface of the upper housing can be spanned entirely by the strainer. In embodiments where the inlet aperture is a smaller hole on the top surface of the housing, the strainer can be disposed above the aperture. Additionally, the strainer can be removably configured, such that a user can periodically remove the strainer to clean the debris or replace the strainer with a fresh strainer. Thus, the lifetime of the device can be extended by replacing the strainer, and clogging can be prevented. The attachment of the strainer to the housing can be provided in a number of ways, such as rotatable screw threading, interference fit, friction fit, gaskets, and the like. For example, the center of the strainer can comprise screw threading such that a strainer screw can be tightened to fasten the strainer to the top of the housing. Alternatively, the flexible latches used on the upper housing for the one or more floatation devices can similarly be used to detachably attach the strainer to the interior of the upper lip.

The upper housing can further comprise an upper chamber consisting of an interior void of the upper housing. The upper chamber can comprise an open top spanned by the strainer. In other words, the strainer can entrain large debris while allowing fluid to flow through the inlet aperture and into the upper chamber. Additionally, the upper housing can comprise an outlet aperture configured to allow fluid to flow from the interior void through the outlet aperture. In other words, both the inlet and outlet apertures are in fluid communication with the upper chamber, the inlet aperture being spanned by a strainer. The upper chamber can be any suitable volume desired so long as the upper chamber is able to fit within the upper housing.

The upper housing can further comprise a filter housed in the upper chamber. As used herein, a "filter" is a sieving device configured with smaller openings than the strainer. As would be appreciated by one of ordinary skill in the art, such an embodiment would provide for the entrainment of smaller particulates passed through the strainer. The filter can be any filter known in the art for liquid filtration, such as packed beds or film membranes. The filter can be positioned after the strainer such that smaller particulates not entrained by the strainer can be caught by the filter before flowing out of the upper chamber.

In some embodiments, the filter can be placed across the upper chamber outlet aperture. Alternatively, because filter efficiency functions based on surface area, the filter can be disposed vertically in the upper chamber along the full height of the upper chamber and in front of the upper chamber outlet aperture. In other words, the upper chamber can be divided by the filter, such that water flows from the strainer to a first portion of the upper chamber, through the filter, into a second portion of the upper chamber, and out of the upper chamber outlet aperture. In some embodiments, the filter can be configured in a hollow cylinder substantially surrounding the upper chamber outlet aperture and running the height of the upper chamber up to the strainer. In other words, the upper chamber can be partitioned into two separate, concentric circular chambers with the outer chamber receiving fluid from the strainer and the inner chamber being in fluid communication with the outlet aperture, the two chambers being partitioned by the filter. Alternatively, the filter partition can simply be a vertical partition with a first chamber receiving fluid from the strainer and a second chamber in fluid communication with the outlet aperture.

In some embodiments, the filter can be removeable and/or replaceable. In embodiments where the strainer is removeable from the upper housing, one can access the filter upon removal of the strainer. Such an embodiment would provide for improved use and lifetime of the device upon installation of a fresh filter. For example, using the aforementioned screw method to remove the strainer, removal of the screw can also remove the filter. In some embodiments, the strainer and filter can be interconnected such that both can be replace simultaneously. In such an embodiment, the filter can fasten the filter and strainer to the rest of the housing. Alternatively, the strainer can fasten the filter and strainer to the rest of the housing.

In some embodiments, the device can further comprise an additional filter referred to herein as a "prefilter" configured to be placed on top of or before the strainer. The device can comprise the prefilter in addition to the aforementioned filters. The prefilter can comprise a sponge-like material configured to trap debris from the pool and further improve the filtration efficiency of the device. It is understood that the prefilter can comprise any material that is porous on the macro scale. The prefilter material can be soft and malleable or hard and rigid. The existence of a prefilter can improve the lifetime of the interior filter by catching large debris before it can reach the filter and reduce the energy consumption of the device as the pressure drop across the filter will be decreased due to decreased clogging. In some embodiments, the prefilter can comprise an adsorptive material, such as activated carbon. The addition of the adsorptive material can aid in the removal of organic impurities from the pool to further increase pool cleanliness and user safety. In some embodiments, the prefilter can be removable and replaceable, and can be removed in the same manner as the strainer.

Once fluid flows out of the upper chamber, in some embodiments, fluid can flow into the lower chamber. Due to the pressure drop created by the strainer and the filter in the upper chamber, the lower chamber can house a pump to improve fluid flow through the device. The pump of the cleaning device of the invention comprises a pump inlet and a pump outlet. In such an embodiment, the pump inlet can lead to the exterior of the lower housing and can be in fluid communication with the upper housing outlet aperture. The pump outlet can be in fluid communication with the outlet aperture. In some embodiments, the lower housing can further comprise a lower chamber in fluid communication with the pump inlet and the pump outlet. In other words, fluid can flow out of the upper housing, into the pump inlet, through the lower chamber, out the pump outlet, and out the outlet aperture to the pool.

The present invention provides a pool cleaning device comprising a pump where the pump can facilitate flow of the fluid through the cleaning device. In some embodiments, the pump can be a centrifugal pump. The pump can have an impeller operable to rotate and move fluid. The rotation of the impeller would create a pressure gradient thus encouraging fluid flow through the device. The addition of the pump, in some embodiments, would provide for improved fluid flow through the device and overall fluid circulation in the pool. Additionally, the pump can improve fluid flow through the strainer and the filter improving filter efficiency and entrainment of debris. It is understood that other types of pumps or other pressure gradient-creating devices can be used to improve fluid flow through the device, such as cyclones. Suitable examples of pumps can include, but are not limited to, piston pumps, gear pumps, screw pumps, rotary vane pumps, positive displacement pumps, diaphragm pumps, hydraulic pumps, and the like.

In some embodiments, the impeller can be moved by a rotor housed within the pump and powered by a stator. For example, the stator can be a solenoid stator. The pump can be powered by a power source, such as a battery, rechargeable battery, and the like. In some embodiments, the power source can be configured to power the stator to move the rotor and, by extension, the impeller. By way of another example, the pump can be powered by a brushless DC motor. As would be appreciated, a brushless DC motor can reduce the weight of the pump (and the overall device) and improve the operating efficiency of the pump. In some embodiments, the power source can be housed with the pump in the lower housing. Having the pump powered by a power source within the device itself would remove the need for additional hoses or cables to power the pump. In some embodiments, the power source can further comprise a power-gathering means, such as hydrodynamic or solar (e.g., solar panels), or a combination thereof. In some embodiments, the pump can be powered by more than one power sources or have a built-in redundancy of power sources in case of failure.

Additionally, it is understood that the power source can be an external power source. In some embodiments, the device can further comprise a power cable operable to provide power from an external power source to the pump. For example, the device can comprise a power cable running from the stator to the external power source to provide a current to the stator. The power cable, for example, can run to a battery pack, solar charger, wall outlet, or any other well-known power source. The power cable can be insulated and substantially waterproof to prevent short circuits and safety hazards. In some embodiments, the device can house an internal power source as a backup in case the power cable should fail. By way of example and not limitation, a power cable can run from a wall outlet to a pool cleaning device. The wall outlet can provide an electric current to a solenoid stator, which causes the solenoid stator to produce a magnetic field to spin a magnetic rotor. As mentioned above, the magnetic rotor can be attached to and subsequently rotate a pump impeller. In some embodiments, the power cable can comprise a transformer operable to change the voltage provided by the external power source to the pump. For example, a transformer can change the voltage of a power cable connected to a 120V outlet to 12V to be received by the pump. Additionally, the transformer may transform a first type of power to a second type of power. For example, the transformer may change the first power connected to the power cable from 120V AC to a second power connected to the pump of 12V DC. It is understood that the transformer can be operable to change a first voltage from a power source to a second voltage to be received by the pump. The transformer may be, for instance, a laminated core, solid core, toroidal core, air core, or any other type of transformer known to one of ordinary skill in the art.

In some embodiments, the stator can be configured to power the pump at a frequency of 3000 rpm or greater (e.g., 3100 rpm or greater, 3200 rpm or greater, 3300 rpm or greater, 3400 rpm or greater, 3500 rpm or greater, 3600 rpm or greater, 3700 rpm or greater, 3800 rpm or greater, 3900 rpm or greater, 4000 rpm or greater, 4100 rpm or greater, 4200 rpm or greater, 4300 rpm or greater, 4400 rpm or greater, 4500 rpm or greater, 4600 rpm or greater, 4700 rpm or greater, 4800 rpm or greater, 4900 rpm or greater, or 5000 rpm or greater). In some embodiments, the stator can be configured to power the pump at a frequency of 3000 rpm or less (e.g., 3100 rpm or less, 3200 rpm or less, 3300 rpm or less, 3400 rpm or less, 3500 rpm or less, 3600 rpm or less, 3700 rpm or less, 3800 rpm or less, 3900 rpm or less, 4000 rpm or less, 4100 rpm or less, 4200 rpm or less, 4300 rpm or less, 4400 rpm or less, 4500 rpm or less, 4600 rpm or less, 4700 rpm or less, 4800 rpm or less, 4900 rpm or less, or 5000 rpm or less). In some embodiments, the stator can be configured to power the pump at a frequency of from 1000 to 5000 rpm (e.g., from 1100 to 4900 rpm, from 1200 to 4800 rpm, from 1300 to 4700 rpm, from 1400 to 4600 rpm, from 1500 to 4500 rpm, from 1600 to 4400 rpm, from 1700 to 4300 rpm, from 1800 to 4200 rpm, from 1900 to 4100 rpm, from 2000 to 4000 rpm, from 2100 to 3900 rpm, from 2200 to 3800 rpm, from 2300 to 3700 rpm, from 2400 to 3600 rpm, or from 2500 to 3500 rpm).

In some embodiments, the provided power source for the pump can be rechargeable. Embodiments of the present disclosure can provide a power charging dock for the pool cleaning device. The charging dock can be configured to attach to a power source, such as a power outlet, and provide power to charge the pump power source. The charging dock can generally be of a shape configured to receive the base of the pool cleaning device. In some embodiments, the charging dock can comprise two or more prongs configured to generally support the pool cleaning device. During charging, the device may remain docked on the charging dock and supported by the two or more prongs. In some embodiments, the charging dock can comprise a light or other means of providing a visual effect to indicate a level or charging to a user. For example, the dock can comprise a light-emitting diode configured to blink while charging the device and change to a solid light when the charging is complete. Alternatively, the visual effect can be provided on the device itself rather than the charging dock.

In order to communicate with the charging dock, the housing of the device can contain a charging port. The charging port can be disposed on the exterior of the housing, in some embodiments, such as the exterior of the lower housing. The charging port can be configured to electrically communicated with the charging dock to provide power to the pump power source. To receive power from the charging dock, the charging port can comprise one or more conductors in some embodiments. Additionally, the charging port can comprise a waterproof cover or other such protective device to protect the charging port and other electrical components from contacting water. The waterproof cover would protect the charging port from forming a short circuit by contacting water or another such fluid when in use. In some embodiments, the charging port can be configured to bind to the charging dock through an interference fit or friction fit.

A storage dock is also disclosed herein. The storage dock can generally be of a shape configured to receive the base of the pool cleaning device. In some embodiments, the storage dock can comprise two or more prongs configured to generally support the pool cleaning device. The storage dock can provide a secure manner to store the pool cleaning device while not in use.

The waterproof cover can be configured on the housing to reveal the charging port. For example, the waterproof cover can comprise a hinge configured to swing the waterproof cover away from the charging port when charging is desired, or the waterproof cover can slide along tracks on the housing to reveal the charging port. In some embodiments, the waterproof cover can be completely removable from the housing, such that the waterproof cover is a separate piece. In some embodiments, the electrical system can further comprise a switch operable to turn the pump on or off protected by the waterproof cover. The switch can be in electrical communication with the stator, power source, or the pump. In some embodiments, the switch can be disposed on the exterior of the housing. Alternatively, the switch can be housed in a recess in the housing and protected by the waterproof cover.

In some embodiments, the electrical system can be completely internal. In other words, the electrical system can be completely housed within the housing. To maintain the waterproofness of the device, provide electrical insulation, and improve user safety, the electrical system can be potted with a waterproof material, such as epoxy. In other words, the housing of the electrical system (i.e., the stator, the power source, etc.) can be substantially filled with epoxy to prevent any water from entering the housing. Suitable examples of a waterproof material can include, but are not limited to, thermoset polymers, thermoplastic polymers, epoxy resins, oligomers, bisphenol A epoxy resin, bisphenol F epoxy resin, Novolac epoxy resin, cycloaliphatic epoxy resin, epoxy resin diluents, glycidylamine epoxy resin, self-curing epoxy resins, and the like. Additionally, the waterproof material may comprise other additives, such as curing agents, inhibitors, coatings, pigments, adhesives, and the like.

Reference will now be made in detail to exemplary embodiments of the invention, examples of which are illustrated in the accompanying drawings and disclosed herein. Wherever convenient, the same references numbers will be used throughout the drawings to refer to the same or like parts.

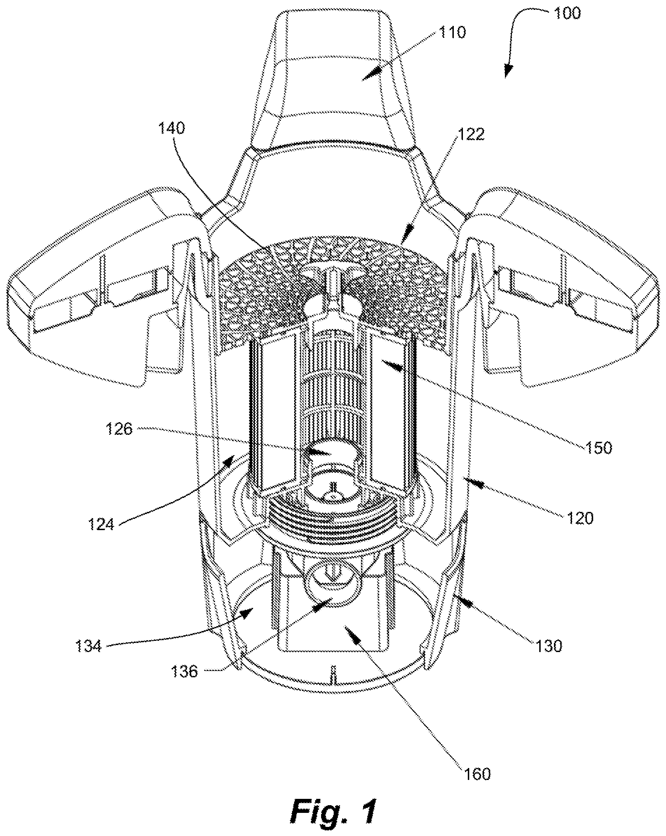

As shown in FIG. 1, pool cleaning device 100 can comprise one or more floatation devices 110, upper housing 120, lower housing 130, strainer 140, filter 150, and pump 160. The device of the invention comprises one or more floatation devices, upper housing, lower housing, strainer, and pump. As water is pumped and circulated to clean the pool, dirty water can pass through filter 140, which is disposed across inlet aperture 122, and into upper chamber 124. Large debris can be entrained by strainer 140 before entering upper chamber 124. Dirty water can further pass through filter 150 and out of upper chamber 124 via upper chamber outlet aperture 126. Smaller, and in some embodiments, microbial debris can be entrained by the filter prior to exiting upper chamber 124. The water can then pass into lower chamber 134 via pump 160. Pump 160 can be configured to circulate water through pool cleaning device 100, and by extension, the pool. Water can exit pump 160 (and by extension pool cleaning device 100) via outlet aperture 136. Such an embodiment can provide for robust circulation of water in a pool combined with the cleaning aspects of the combined strainer 140 and filter 150 to provide an improved user experience in the pool with ease. In some embodiments, strainer 140 and filter 150 are removable and replaceable, such that the lifetime of pool cleaning device 100 may be extended.

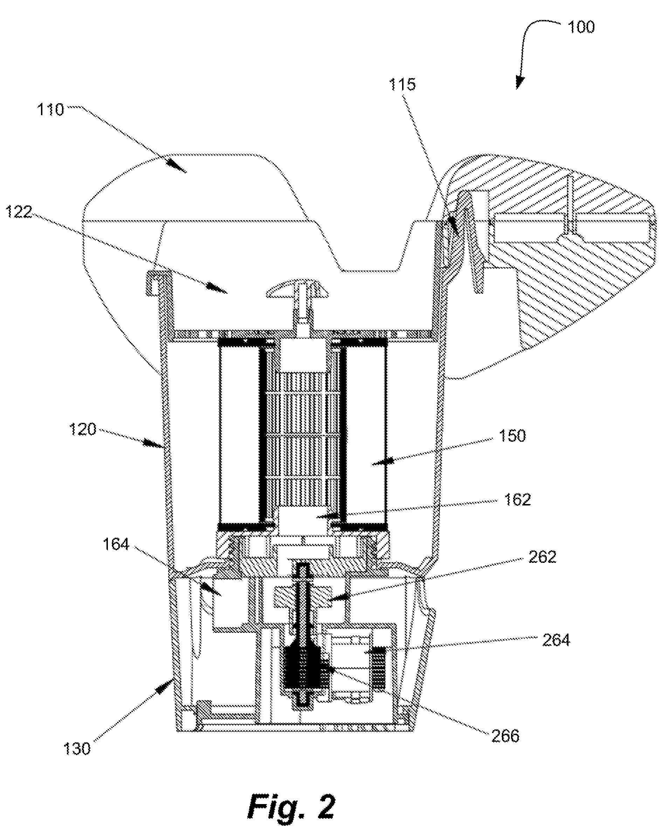

As shown in FIG. 2, pump 160 can be housed in lower housing 130 and can comprise impeller 262. The pump of the cleaning device of the invention is contained in the lower housing. Of course, pump 160 may be other types of pumps than centrifugal. Impeller 262 can be powered by stator 264 and attached to rotor 266. Stator 264 and rotor 266 can be configured to rotate impeller 262 and provide fluid flow through pump 160. Fluid may enter pump 160 through pump inlet 162 and exit pump 160 through pump outlet 164. For example, pool water, after being purified by filter 150, can exit upper housing 120 through upper chamber outlet aperture (not shown) and into pump inlet 160. Pump inlet 160 can be in fluid communication with upper chamber outlet aperture such that a constant pathway for fluid flow is created through pool cleaning device 100.

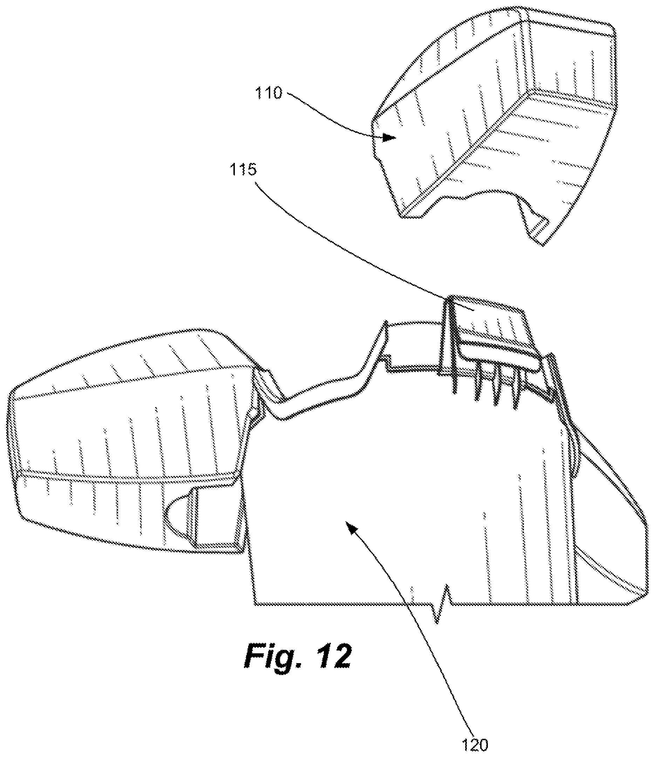

In some embodiments, upper housing 120 and lower housing 130 can be configured to detachably attach to each other while remaining in fluid communication when attached. In other words, the inlet to lower housing 130 can connect to the outlet of upper housing 120 to create a continuous fluid pathway. Additionally, as shown in FIG. 2 and further in FIG. 12, pool cleaning device 100 can further comprise latches 115 configured to detachably attach to one or more floatation devices 110. In some embodiments, latches 115 can be disposed around inlet aperture 122 in a circumferential configuration.

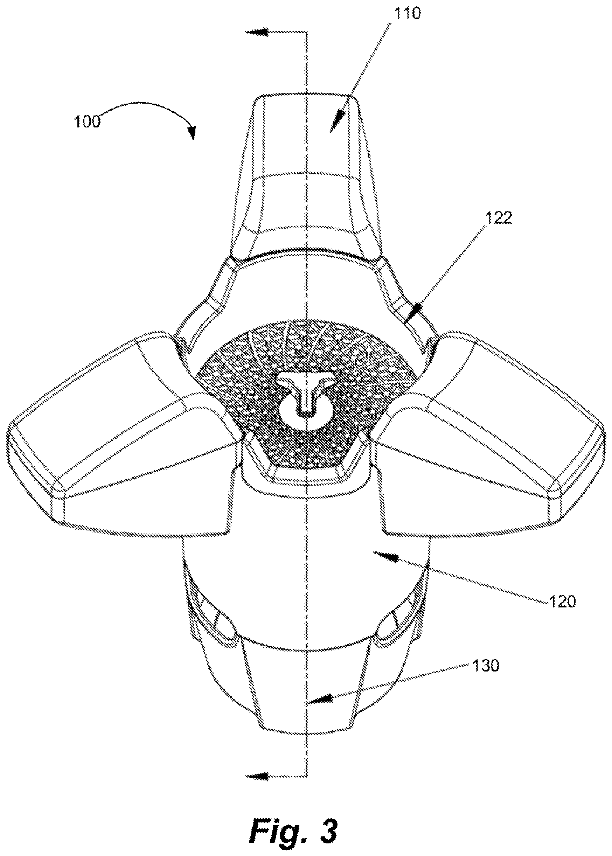

FIG. 3 illustrates the exterior of an embodiment of pool cleaning device 100. Pool cleaning device 100 can comprise one or more floatation devices 110, inlet aperture 122, upper housing 120, and lower housing 130. The device of the invention comprises one or more floatation devices, upper housing, and lower housing. One or more floatation devices 110 may be placed around pool cleaning device 100 and may be customized by a user of the device in many configurations as described above.

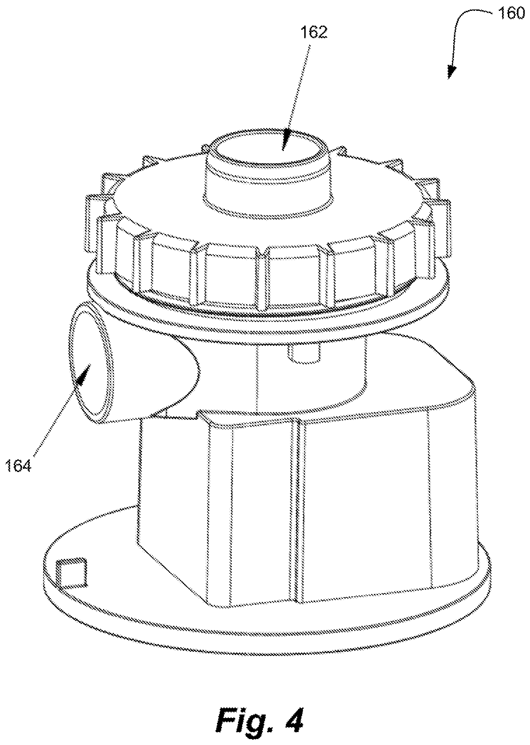

Figure 4 illustrates a pump suitable for the cleaning device of the invention. The device of the invention comprises a pump.

Pump 160 can have pump inlet 162 and pump outlet 164. The pump of the cleaning device of the invention comprises a pump inlet and a pump outlet. In some embodiments, pump inlet 162 can be in fluid communication with upper housing outlet aperture (not shown) to receive fluid from the upper housing. Additionally, pump outlet 164 can be in communication with outlet aperture (not shown) to pass fluid out of pump 160 and back into the pool. Pump 160 can be contained in a housing, such as lower housing 130 or upper housing 120. The pump of the cleaning device of the invention is contained in the lower housing.

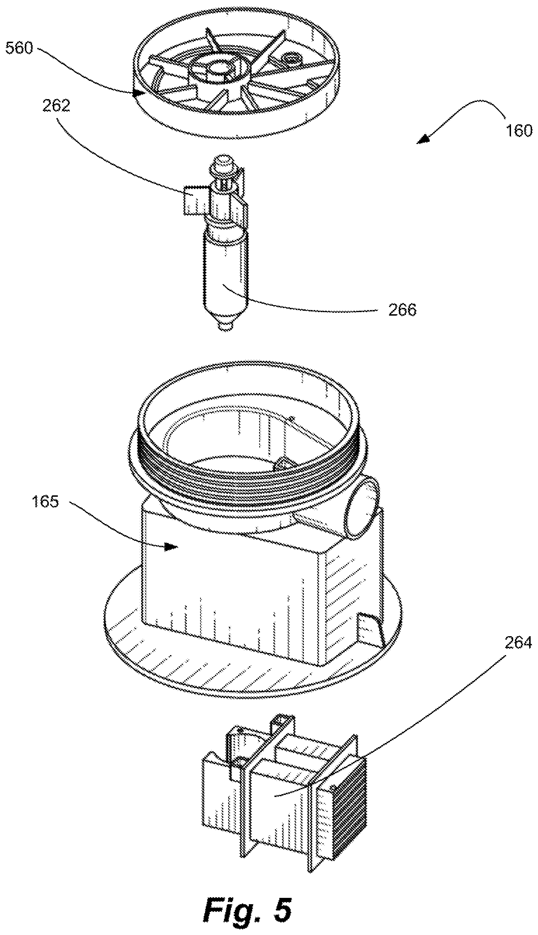

Further, as shown in FIG. 5, pump 160 can comprise pump housing 165 and pump cover 560, configured to create an enclosed pump volume within any chamber containing pump 160. Pump housing 165 can house the components of pump 160, such as rotor 266 and stator 264. Rotor 266 and stator 264 can be configured to power pump 160 by rotating impeller 262 to induce fluid flow. In some embodiments, pump cover 560 can comprise pump inlet (not shown) in communication with the upper chamber to allow for fluid flow through the pump volume. Impeller 262 may pull fluid through pump cover 560 and through pump 160.

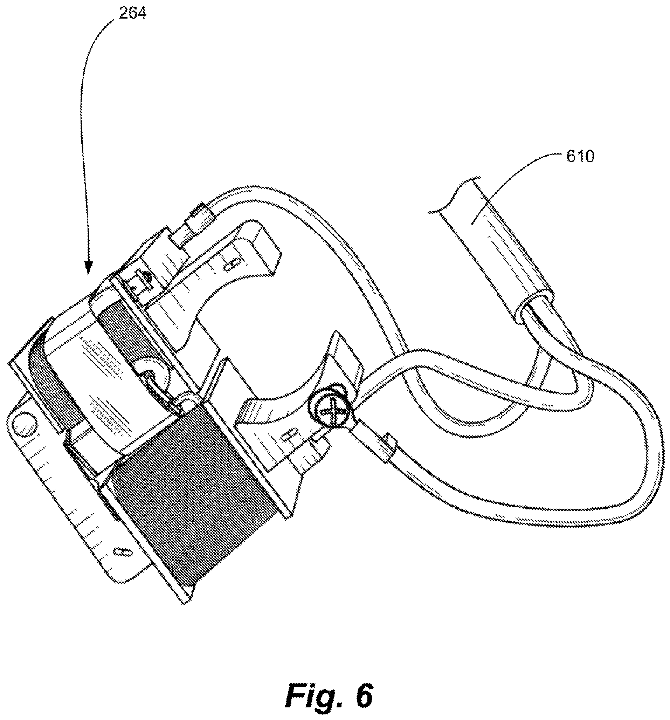

A stator can be provided, as shown in FIG. 6. In some embodiments, stator 264 can be connected to a power source via power cable 610. For example, a solenoid stator 264 can be provided an electric current from a power source via power cable 610.

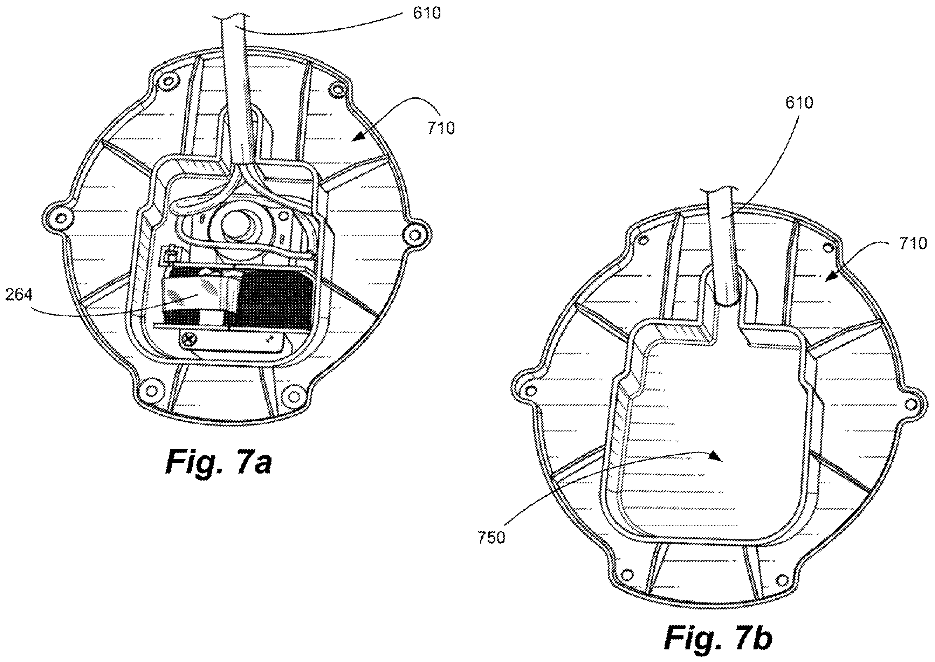

Due to the electrical nature of the components mentioned above, steps can be taken to waterproof the device and ensure the safety of the user. As shown in FIG. 7a and FIG. 7b, the electrical components, such as stator 264, can be potted and encased using a waterproof material, such as epoxy resin, to create waterproof shell 750. Additionally, power cable 610 can comprise an insulating layer to prevent contact with water. The electrical components (i.e. stator 264) can be mounted on pump base 710 to provide structural integrity and further waterproof the system.

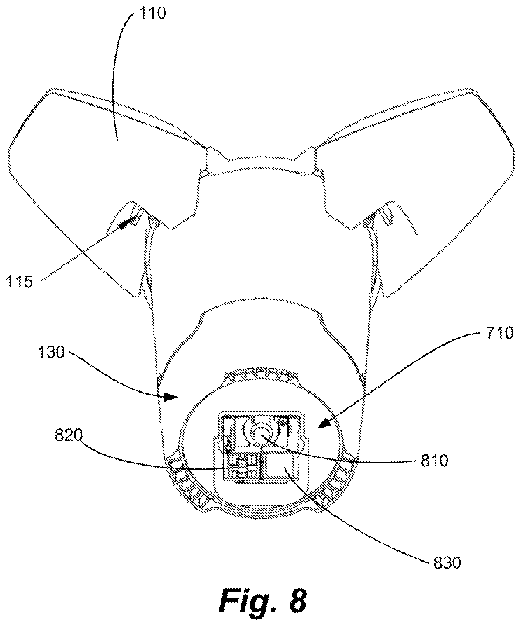

As shown in FIG. 8, pump base 710 can be mounted on or in lower housing 130. The pump of the invention is contained in the lower housing. Additionally, pump base 710 can comprise components to operate the pump and the device. For example, pump base 710 can comprise such components as on/off switch 810, charging port 820, or visual indicator 830. In some embodiments, pump base 710 can comprise a power cable exit for a power cable (not shown) in cases where an external power source is used. It is understood that the electrical components mounted on pump base 710 may be in communication with a power source, the pump (i.e. the stator), or any other components of the device used to operate the device. For example, the pump base 710 can include a brushless DC motor to power the pump. As would be appreciated, a brushless DC motor can reduce the weight of the pump (and the overall device) and improve the operating efficiency of the pump. Further, the components may be waterproofed to ensure user safety, or pump base 710 can comprise a waterproof cover (not shown) configured to house the components when not in use.

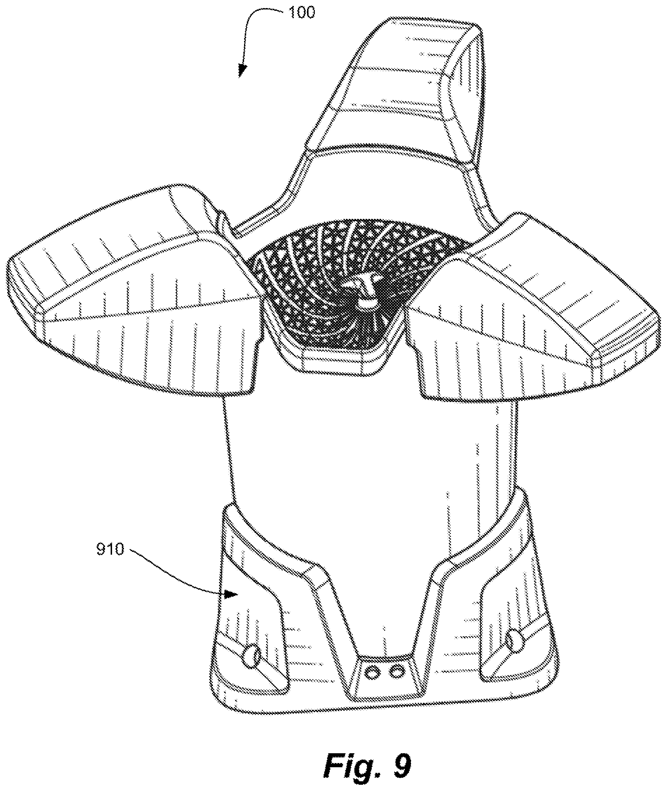

For storage of pool cleaning device 100, a dock 910 can be used, as shown in FIG. 9. Dock 910 can be configured to receive pool cleaning device 100 and hold the device substantially upright. In some embodiments, dock 910 can comprise charging means to charge the device. For example, dock 910 can use wireless charging to charge a power source within the device or can be in electrical communication with a charging port mounted on the pump base. In some embodiments, dock 910 can further comprise a power cable to connect dock 910 to a power source so that dock 910 can charge the device. In some embodiments, dock 910 may comprise no electrical components and may simply hold pool cleaning device 100 in place for storage. Dock 910 can further comprise prongs in the shape of pool cleaning device 100 to better receive the device and store the device.

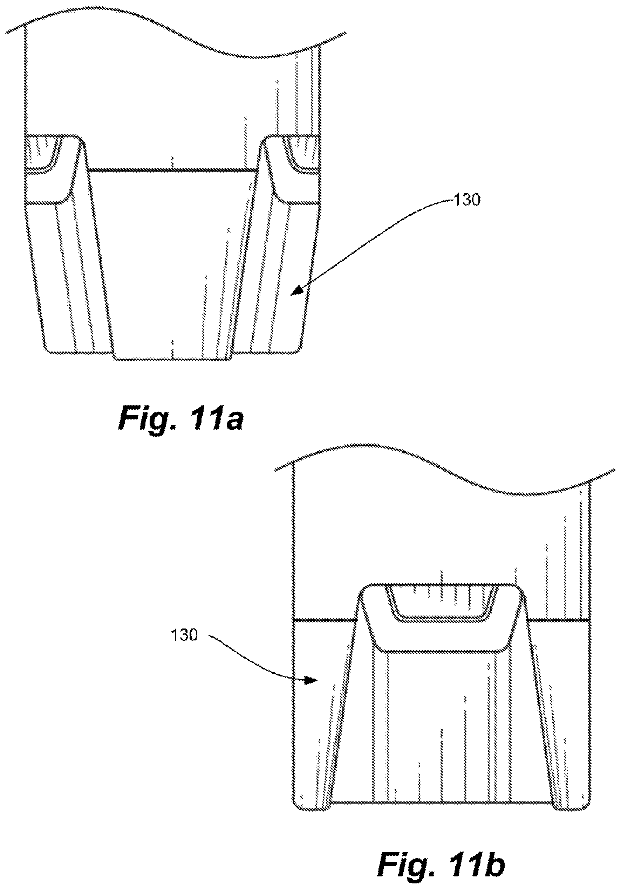

Further, lower housing 130 can comprise contouring and channeling to improve the contact with dock 910, as shown in FIG. 11a and FIG. 11b. The prongs of dock 910 may match and correspond with the contouring and channeling of lower housing 130. In some embodiments, dock 910 can attach to lower housing 130 via a friction fit. As would be appreciated by one of ordinary skill in the art, such an embodiment would improve the robustness of the attachment to dock 910 and improve the stability of the device when attached to dock 910.

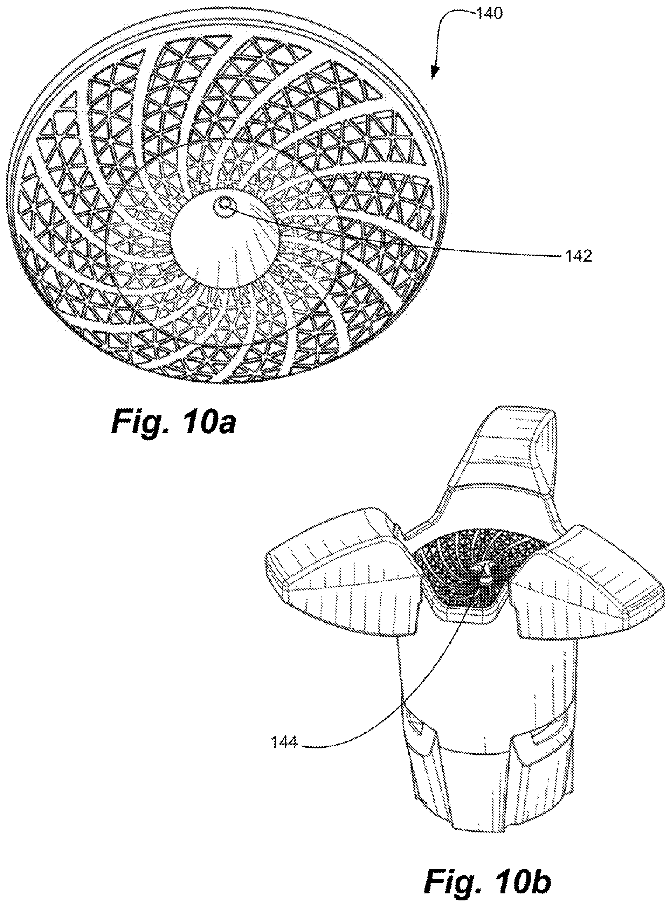

A strainer suitable for a cleaning device according to the invention is shown in FIG. 10a and FIG. 10b. The device of the invention comprises a strainer. As shown, strainer 140 has a predetermined pattern to encourage fluid flow (e.g., induce laminar flow) through strainer 140 and entrain large debris. Strainer 140 can comprise a screw hole 142 configured to attach strainer 140 to the pool cleaning device. In some embodiments, strainer 140 is removable and replaceable, thus extending the lifetime of the pool cleaning device. Screw hole 142 can further be configured to receive fastening screw 144. Fastening screw 144 can pass through strainer 140 via screw hole 142 to fasten strainer 140 to the pool cleaning device. When desired, fastening screw 144 may be removed from strainer 140 to remove strainer 140 from the pool cleaning device.

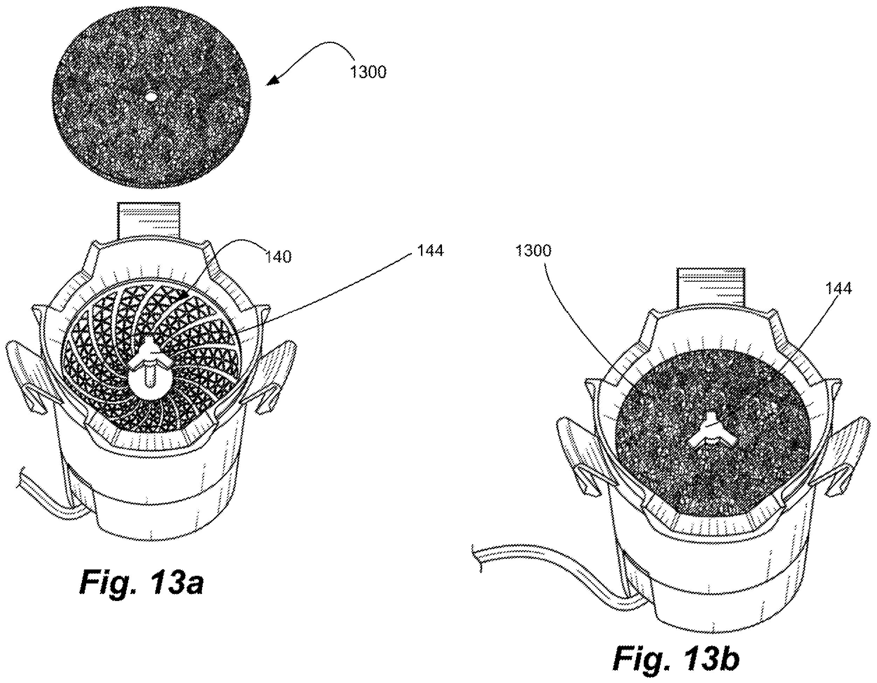

As shown in FIG. 13a and FIG. 13b, a prefilter may be provided. Prefilter 1300 can comprise a sponge-like material configured to remove large debris. In some embodiments, prefilter 1300 can have adsorptive properties operable to remove organic impurities from the pool. Prefilter 1300 may be placed on top of strainer 140 within the pool cleaning device. Prefilter 1300 may also have a hole configured to receive fastening screw 144. Fastening screw 144 may fasten prefilter 1300 to strainer 140 when in use. In some embodiments, prefilter 1300 can be removeable and replaceable to extend the lifetime of the pool cleaning device.

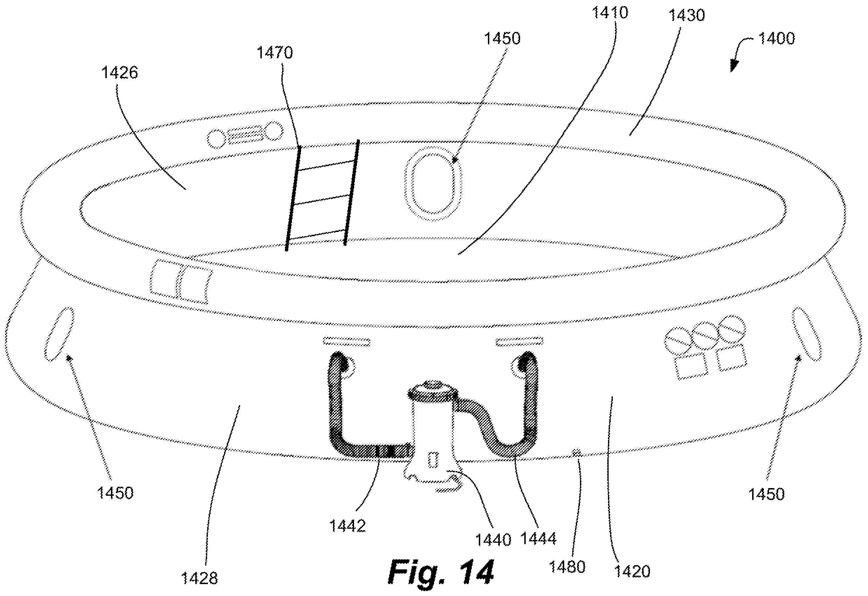

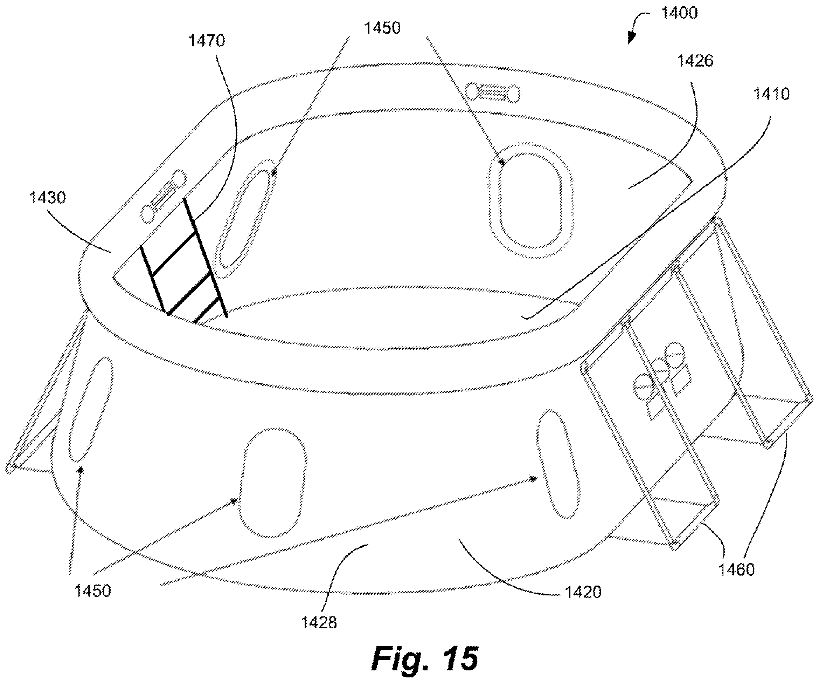

As shown in FIG. 14, and similarly FIG. 15, a pool 1400 for use with some embodiments of the pool cleaning device of the present invention can be provided. Pool 1400 can comprise at least base 1410 and unitary sidewall 1420 circumferentially attached to base 1410. In some embodiments, unitary sidewall 14200 can have an upper portion, a lower portion having a lower lip extending horizontally inward to meet base 1410, and opposing ends joined together by exactly one seam. Upward force-providing member 1430 can be provided, such as an inflatable ring or buoyant device, operable to raise unitary sidewall 1420 as the pool is filled. Upward force-providing member 1430 can be disposed on a top portion of unitary sidewall 1420. Unitary sidewall 1420 can additionally comprise portholes 1450 to provide a desired level of transparency in unitary sidewall 1420. Portholes 1450 can provide a means for a user to see through unitary sidewall 1420 from outer wall 1428 and through inner wall 1426. Pool 1400 can further comprise pool ladder 1470 to provide an easy means of entering and exiting pool 1400 without damaging upward force-providing member 1430. Additionally, pool 1400 may comprise drain 1480 to provide easy drainage and storage of pool 1400.

In some embodiments, pool 1400 can further comprise pump 1440 disposed on unitary sidewall 1420. Pump 1440 can have pump inlet hose 1442 and pump outlet hose 1444 configured to intake water through unitary sidewall 1420 and pump the water back into the pool. As shown, the addition of hoses and an external pump makes the pool cumbersome, bulky, and not aesthetically pleasing. Therefore, embodiments of the present disclosure can provide a pool cleaning device to eliminate the need for pump 1440, as in FIG. 15.

In some embodiments, as in FIG. 15, pool 1400 may additionally have support element 1460 to aid in providing structural rigidity. Support element 1460 may comprise a plurality of horizontal and/or vertical support members, as shown. For example, support element 1460 may comprise a plurality of vertical support members to aid upward force-providing member 1430, and a plurality of horizontal support members to support unitary sidewall 1420. Support element 1460 may be adjustable, removable, and/or modular to improve the user experience when using pool 1400.

While the present invention has been described in connection with a plurality of exemplary aspects, as illustrated in the various figures and discussed above, it is understood that various modifications may be made without departing from the scope of the claims, which define the invention.

## Claims

1. A buoyant cleaning device (100) for an above-ground pool,
comprising: a housing including an upper housing (120)
and a lower housing (130);
a strainer (140) contained in the upper housing (120);
a pump (160) contained in the lower housing (130), the pump (160) comprising a pump inlet (162) and a pump outlet (164); and
one or more flotation (110) devices detachably attached to the housing;
wherein the strainer (140) is concave inwards and provides surface rifling in a spiral fashion to induce laminar flow of fluid through the strainer (140).

2. The buoyant cleaning device (100) of claim 1, further comprising an internal power source in electrical communication with the pump (160), the internal power source contained in the lower housing (130).

3. The buoyant cleaning device (100) of Claim 1 or Claim 2, wherein the upper housing (120) comprises an inlet aperture (122), wherein the strainer (140) is disposed within the inlet aperture (122) and removably fastened to the upper housing (120) with a strainer screw.

4. The buoyant cleaning device (100) of Claim 1, wherein the lower housing ( 1 3 0 ) comprises an outlet aperture in fluid communication with the pump outlet (164).

5. The buoyant cleaning device (100) of Claim 1 or Claim 2, further comprising a filter (150) disposed within the housing between the strainer (140) and the pump (160), the filter (150) configured to detachably attach from the housing.

6. The buoyant cleaning device (100) of Claim 1 or Claim 2, wherein the upper housing (120) and the lower housing (130) are configured to detachably attach to each other.

7. The buoyant cleaning device ( 1 0 0) of Claim 1 or Claim 2, wherein the upper housing ( 1 2 0 ) comprises an upper chamber ( 1 2 4 ) defined by an interior space between the strainer ( 1 4 0) and the lower housing (130), and wherein the lower housing ( 1 3 0 ) comprises a lower chamber (134) in fluid communication with the pump (160).

8. The buoyant cleaning device (100) of Claim 7, wherein the pump inlet (162) is in fluid communication with the upper chamber (124).

9. The buoyant cleaning device (100) of Claim 1 or Claim 2, wherein the upper housing (120) comprises one or more latches (115), each of the one or more latches (115) corresponding to a respective flotation device (110) of the one or more flotation devices (110).

10. The buoyant cleaning device (100) of Claim 2, wherein the pump (160) comprises a rotor (266) and a stator (264), and the stator (264) is in electrical communication with the internal power source.

11. The buoyant cleaning device (100) of Claim 10, further comprising a waterproof shell (750) made from an epoxy resin substantially encasing the stator (264) and the internal power source.

## Patentansprüche

1. Schwimmfähige Reinigungsvorrichtung (100) für ein oberirdisches Schwimmbecken, umfassend:
ein Gehäuse, das ein oberes Gehäuse (120) und ein unteres Gehäuse (130) beinhaltet;
ein Sieb (140), das in dem oberen Gehäuse (120) enthalten ist;
eine Pumpe (160), die in dem unteren Gehäuse (130) enthalten ist, wobei die Pumpe (160) einen Pumpeneinlass (162) und einen Pumpenauslass (164) umfasst; und
eine oder mehrere Schwimmvorrichtungen (110), die lösbar an dem Gehäuse angebracht sind;
wobei das Sieb (140) nach innen konkav ist und ein Oberflächendrall in einer spiralförmigen Weise bereitstellt, um eine laminare Strömung von Fluid durch das Sieb (140) zu induzieren.

2. Schwimmfähige Reinigungsvorrichtung (100) nach Anspruch 1, ferner umfassend eine interne Stromquelle in elektrischer Kommunikation mit der Pumpe (160), wobei die interne Stromquelle in dem unteren Gehäuse (130) enthalten ist.

3. Schwimmfähige Reinigungsvorrichtung (100) nach Anspruch 1 oder Anspruch 2, wobei das obere Gehäuse (120) eine Einlassöffnung (122) umfasst, wobei das Sieb (140) innerhalb der Einlassöffnung (122) angeordnet ist und mit einer Siebschraube entfernbar an dem oberen Gehäuse (120) befestigt ist.

4. Schwimmfähige Reinigungsvorrichtung (100) nach Anspruch 1, wobei das untere Gehäuse (130) eine Auslassöffnung in Fluidkommunikation mit dem Pumpenauslass (164) umfasst.

5. Schwimmfähige Reinigungsvorrichtung (100) nach Anspruch 1 oder Anspruch 2, ferner umfassend einen Filter (150), der innerhalb des Gehäuses zwischen dem Sieb (140) und der Pumpe (160) angeordnet ist, wobei der Filter (150) dazu konfiguriert ist, lösbar von dem Gehäuse befestigt zu werden.

6. Schwimmfähige Reinigungsvorrichtung (100) nach Anspruch 1 oder Anspruch 2, wobei das obere Gehäuse (120) und das untere Gehäuse (130) dazu konfiguriert sind, lösbar aneinander befestigt zu werden.

7. Schwimmfähige Reinigungsvorrichtung (100) nach Anspruch 1 oder Anspruch 2, wobei das obere Gehäuse (120) eine obere Kammer (124) umfasst, die durch einen Innenraum zwischen dem Sieb (140) und dem unteren Gehäuse (130) definiert ist, und wobei das untere Gehäuse (130) eine untere Kammer (134) in Fluidkommunikation mit der Pumpe (160) umfasst.

8. Schwimmfähige Reinigungsvorrichtung (100) nach Anspruch 7, wobei der Pumpeneinlass (162) in Fluidkommunikation mit der oberen Kammer (124) steht.

9. Schwimmfähige Reinigungsvorrichtung (100) nach Anspruch 1 oder Anspruch 2, wobei das obere Gehäuse (120) eine oder mehrere Verriegelungen (115) umfasst, wobei jede der einen oder mehreren Verriegelungen (115) einer jeweiligen Schwimmvorrichtung (110) der einen oder mehreren Schwimmvorrichtungen (110) entspricht.

10. Schwimmfähige Reinigungsvorrichtung (100) nach Anspruch 2, wobei die Pumpe (160) einen Rotor (266) und einen Stator (264) umfasst und der Stator (264) in elektrischer Kommunikation mit der internen Stromquelle steht.

11. Schwimmfähige Reinigungsvorrichtung (100) nach Anspruch 10, ferner umfassend eine wasserdichte, aus einem Epoxidharz hergestellte Schale (750) ist, die den Stator (264) und die interne Stromquelle im Wesentlichen umschließt.

## Revendications

1. Dispositif de nettoyage flottant (100) pour piscine hors sol,
comprenant : un logement comprenant un logement supérieur (120) et un logement inférieur (130) ;
une crépine (140) contenue dans le logement supérieur (120) ;
une pompe (160) contenue dans le logement inférieur (130), la pompe (160) comprenant une entrée (162) de pompe et une sortie (164) de pompe ; et
un ou plusieurs dispositifs de flottaison (110) attachés de manière amovible au logement ;
ladite crépine (140) étant concave vers l'intérieur et fournissant des rayures de surface en spirale pour induire un écoulement laminaire de fluide à travers la crépine (140).

2. Dispositif de nettoyage flottant (100) de la revendication 1, comprenant en outre une source d'alimentation interne en communication électrique avec la pompe (160), la source d'alimentation interne étant contenue dans le logement inférieur (130).

3. Dispositif de nettoyage flottant (100) de la revendication 1 ou de la revendication 2, ledit logement supérieur (120) comprenant une ouverture d'entrée (122), ladite crépine (140) étant disposée à l'intérieur de l'ouverture d'entrée (122) et fixée de manière amovible au logement supérieur (120) avec une vis de crépine.

4. Dispositif de nettoyage flottant (100) de la revendication 1, ledit logement inférieur (130) comprenant une ouverture de sortie en communication fluidique avec la sortie (164) de pompe.

5. Dispositif de nettoyage flottant (100) de la revendication 1 ou de la revendication 2, comprenant en outre un filtre (150) disposé à l'intérieur du logement entre la crépine (140) et la pompe (160), le filtre (150) étant configuré pour se fixer de manière amovible du logement.

6. Dispositif de nettoyage flottant (100) de la revendication 1 ou de la revendication 2, ledit logement supérieur (120) et ledit logement inférieur (130) étant configurés pour se fixer l'un à l'autre de manière amovible.

7. Dispositif de nettoyage flottant (100) de la revendication 1 ou de la revendication 2, ledit logement supérieur (120) comprenant une chambre supérieure (124) définie par un espace intérieur entre la crépine (140) et le logement inférieur (130), et ledit logement inférieur (130) comprenant une chambre inférieure (134) en communication fluidique avec la pompe (160).

8. Dispositif de nettoyage flottant (100) de la revendication 7, ladite entrée (162) de pompe étant en communication fluidique avec la chambre supérieure (124).

9. Dispositif de nettoyage flottant (100) de la revendication 1 ou de la revendication 2, ledit logement supérieur (120) comprenant un ou plusieurs loquets (115), chacun du ou des loquets (115) correspondant à un dispositif de flottaison respectif (110) du ou des dispositifs de flottaison (110).

10. Dispositif de nettoyage flottant (100) de la revendication 2, ladite pompe (160) comprenant un rotor (266) et un stator (264), et ledit stator (264) étant en communication électrique avec la source d'alimentation interne.

11. Dispositif de nettoyage flottant (100) de la revendication 10, comprenant en outre une coque imperméable à l'eau (750) fabriquée à partir d'une résine époxy enveloppant sensiblement le stator (264) et la source d'alimentation interne.
